# EUROPEAN PATENT SPECIFICATION

(11) **EP 0 920 214 B1**
(45) Date of publication and mention of the grant of the patent: **07.04.2004**
(21) Application number: 98309699.1
(22) Date of filing: 26.11.1998
(51) Int. Cl.: H04N 7/26, H04N 7/50

(54) **Apparatus and method of coding/decoding moving picture**
Verfahren und Vorrichtung zur Kodierung/Dekodierung von Bewegtbildern
Appareil et dispositif de codage/décodage d'images en mouvement

(30) Priority: 28.11.1997 JP 34432297
(43) Date of publication of application: 02.06.1999
(73) Proprietor: VICTOR COMPANY OF JAPAN, LTD., Yokohama-Shi, Kanagawa-Ken (JP)
(72) Inventor: Sugiyama, Kenji, Yokosuka-shi, Kanagawa-ken (JP)
(74) Representative: Crawford, Andrew Birkby

(56) References cited:
- EP-A- 0 711 080
- FARBER N ET AL: "Robust H.263 compatible video transmission for mobile access to video servers" PROCEEDINGS. INTERNATIONAL CONFERENCE ON IMAGE PROCESSING (CAT. NO.97CB36144), PROCEEDINGS OF INTERNATIONAL CONFERENCE ON IMAGE PROCESSING, SANTA BARBARA, CA, USA, 26-29 OCT. 1997, pages 73-76 vol.2, XP002161435 1997, Los Alamitos, CA, USA, IEEE Comput. Soc, USA ISBN: 0-8186-8183-7
- SUN H ET AL: "Error concealment algorithms for robust decoding of MPEG compressed video" SIGNAL PROCESSING. IMAGE COMMUNICATION,ELSEVIER SCIENCE PUBLISHERS, AMSTERDAM,NL, vol. 10, no. 4, 1 September 1997 (1997-09-01), pages 249-268, XP004091243 ISSN: 0923-5965
- FARBER N ET AL: "Robust H.263 compatible transmission for mobile video server access" FIRST INTERNATIONAL WORKSHOP ON WIRELESS IMAGE/VIDEO COMMUNICATIONS (CAT. NO.96TH8220), PROCEEDINGS OF FIRST INTERNATIONAL WORKSHOP ON WIRELESS IMAGE/VIDEO COMMUNICATIONS, LOUGHBOROUGH, UK, 4-5 SEPT. 1996, pages 8-13, XP002161436 1996, New York, NY, USA, IEEE, USA ISBN: 0-7803-3610-0
- RIJKSE K: "H.263: VIDEO CODING FOR LOW-BIT-RATE COMMUNICATION" IEEE COMMUNICATIONS MAGAZINE,US,IEEE SERVICE CENTER. PISCATAWAY, N.J, vol. 34, no. 12, 1 December 1996 (1996-12-01), pages 42-45, XP000636452 ISSN: 0163-6804
- SCARGALL L.D.; DLAY S.S.: 'A mobile videophone image codec using wavelets and classified vector quantisation for mobile radio speech channels' INFORMATION VISUALIZATION, 1997. PROCEEDINGS., 1997 IEEE CONFERENCE, LONDON, UK 27 August 1997 - 29 August 1997, LOS ALAMITOS, CA, USA,IEEE COMPUT. SOC, US, pages 267 - 271
- ZDEPSKI J. ET AL: 'Overview of the Grand Alliance HDTV Video Compression System' TWENTY-EIGHTH ASILOMAR CONFERENCE ON PACIFIC GROVE, CA, USA 31 October 1994 - 02 November 1994, LOS ALAMITOS, CA, USA, pages 193 - 197

## Description

### BACKGROUND OF THE INVENTION

The present invention relates to highly efficient coding to convert picture information into digital signals with a small amount of codes for effectively transferring, storing and displaying the picture information. Furthermore, this invention relates to highly efficient coding for moving pictures with inter-picture predictive coding applicable to channel switching, random access, etc.

Highly efficient coding for moving pictures with inter-picture predictive coding provides a very small amount of coded data. On the other hand, the inter-picture predictive coding requires independent (intra-picture coded) frames which are coded independently to be applicable to channel switching among TV channels, for example, or random access to storage media, etc. Because the inter-picture predictive coding requires already decoded independent frames for decoding other frames. Each independent frame generally contains codes the amount of which is three to ten times an inter-picture predictive-coded frame. The more the independent frames, the lower the coding efficiency. The inter-picture predictive coding usually requires one independent frame for every 15th-frame that corresponds to 0. 5 seconds.

Intraframe coding only for low frequency components yields not so large amount of codes compared to interframe predictive coding. Coding efficiency is thus not so low even many independent frames of low frequency components are provided. This is disclosed in Japanese unexamined patent publication No. 1993 (5) - 122686. Since independent frames are reproduced as pictures of low frequency components, channel switching or random access initially reproduces pictures of low resolution and then pictures of high resolution that are gradually close to original pictures.

However, coding described above has drawbacks. Conventional moving picture coding yields a large amount of codes for each independent frame thus having difficulty providing many independent frames with high coding efficiency. This is therefore not applicable to channel switching, random access, high-speed picture search, etc.

Furthermore, the coding disclosed in Japanese unexamined patent publication No 1993 (5) - 122686 requires filters for removing low frequency components for decoding. Code errors if occurred will continue until a next independent frame is produced.

The coding of moving pictures may naturally be performed on a field basis, justead of a frame basis.

### SUMMARY OF THE INVENTION

A purpose of the present invention is to provide an apparatus and a method of efficiently coding a moving picture signal that outputs a bit stream which is applicable to quick channel switching, random access, high-speed search and also code error correction.

Farber, et al in a paper entitled "Robust H263 compatible video transmission for mobile access to video servers" presented to the International Conference on Image Processing in Santa Barbara, CA, USA on 26-29 October 1997, pages 73-76, disclosed an encoding apparatus having a main coding processor to encode an input moving picture signal by inter-picture coding in units of a frame or a field to output a main bit stream, a subsidiary coding processor to encode specific frames or fields carried by the input moving picture signal by intra-picture coding to output a subsidiary bit stream, the specific frames or fields being also coded by the inter-picture coding by the mains processor and a multiplexer to multiplex the main and subsidiary bit stream to generate an output bit stream.

The present invention provides an apparatus for efficiently coding a moving picture signal, comprising:
a main coding processor to selectively encode an input moving picture signal by intra-picture coding or inter-picture coding in units of a frame or a field to output a main bit stream, the intra-picture coding being performed periodically;
a subsidiary coding processor to encode specific frames or fields carried by the input moving picture signal by intra-picture coding to output a subsidiary bit stream, the specific frames or fields being also coded by the inter-picture coding by the main coding processor; and
a multiplexer to multiplex the main and subsidiary bit streams so that each specific frame or field coded by the intra-picture coding by the subsidiary coding processor is inserted in the vicinity of a corresponding specific frame or field coded by the inter-picture coding by the main coding processor, thus generating an output bit stream.

The present invention further provides an apparatus for efficiently decoding a moving picture signal. The decoding apparatus includes a detector that detects a coding-type of an input bit stream formed by multiplexing a main bit stream of frames or fields and subsidiary bit streams, the subsidiary bit streams being periodically inserted in the main bit stream in the vicinity of a predetermined number of the frames or fields, the main bit stream having been coded at quantization steps finer than other quantization steps at which the subsidiary bit streams having been coded, and a coding-type information indicating whether the main bit stream is or the subsidiary bit streams are input, the detector detecting the coding-type information and generating a coding-type signal. The decoding apparatus also includes a controller that selectively outputs the main and the subsidiary bit streams in response to at least the coding-type signal in such a way that the controller outputs both the main and the subsidiary bit streams when no continuous decoding is being performed, while the controller outputs only the main bit stream when continuous decoding is being performed. The decoding apparatus further includes a decoder that decodes the output bit stream to reproduce pictures carried by the input bit stream.

Furthermore, the present invention provides an apparatus for efficiently decoding a moving picture signal. The decoding apparatus includes a first detector to detect a coding-type of an input bit stream formed by multiplexing a main bit stream of frames or fields and subsidiary bit streams, the subsidiary bit streams being periodically inserted in the main bit stream in the vicinity of a predetermined number of the frames or fields, the main bit stream having being coded at quantization steps finer than other quantization steps at which the subsidiary bit streams having been coded, and a coding-type information indicating whether the main bit stream is or the subsidiary bit streams are input, the detector detecting the coding-type information and generating a coding-type signal. The decoding apparatus also includes a second detector to detect an error of the input bit stream and generating an error indicating signal that indicates at which of the frames or fields the error occurs. The decoding apparatus further includes a controller, in response to the coding-type and error indicating signals, to replace the main bit stream of a frame or field with a subsidiary bit stream inserted in the vicinity thereof at which the error occurs with the subsidiary bit stream. The decoding apparatus still further includes a decoder to decode an output bit stream of the controller by intra-picture decoding or inter-picture predictive decoding to reproduce pictures carried by the input bit stream.

Furthermore, the present invention provides a method of efficiently coding a moving picture signal. An input moving picture signal is selectively coded by intra-picture coding or inter-picture coding in unit of frame or filed to output a main bit stream. Specific frames or fields carried by the input moving picture signal are coded by intra-picture coding to output a subsidiary bit stream, the specific frames or fields being also coded by the inter-picture coding by the main coding processor. The main and subsidiary bit streams are multiplexed so that each specific frame or field coded by the intra-picture coding by the subsidiary coding processor is inserted in the vicinity of a corresponding specific frame or field coded by the inter-picture coding by the main coding processor, thus generating an output bit stream.

Furthermore, the present invention provides a method of efficiently decoding a moving picture signal. A coding-type of an input bit stream is detected, the input bit stream being formed by multiplexing a main bit stream of frames or fields and subsidiary bit streams, the subsidiary bit streams being periodically inserted in the main bit stream in the vicinity of a predetermined number of the frames or fields, the main bit stream having been coded at quantitization steps finer than other quantitization steps at which the subsidiary bit streams having been coded, and a coding-type information indicating whether the main bit stream is or the subsidiary bit streams are input, the detector detecting the coding-type information and generating a coding-type signal. The main and the subsidiary bit streams are selectively output in response to at least the coding-type signal in such a way that the controller outputs both the main and the subsidiary bit streams when no continuous decoding is being performed, while the controller outputs only the main bit stream when continuous decoding is being performed. The output bit stream is decoded to reproduce pictures carried by the input bit stream.

Furthermore, the present invention provides a method of efficiently decoding a moving picture signal. A coding-type of an input bit stream is detected, the input bit stream being formed by multiplexing a main bit stream of frames or fields and subsidiary bit streams, the subsidiary bit streams being periodically inserted in the main bit stream in the vicinity of a predetermined number of the frames or fields, the main bit stream having been coded at quantization steps finer than other quantization steps at which the subsidiary bit streams having been coded, and a coding-type information indicating whether the main bit stream is or the subsidiary bit streams are input, the coding-type information being detected, and generating a coding-type signal. An error of the input bit stream is detected to generate an error indicating signal that indicates at which of the frames or fields the error occurs. The main bit stream of a frame or filed with a subsidiary bit stream inserted in the vicinity thereof at which the error occurs is replaced with the subsidiary bit stream in response to the coding-type and error indicating signals. The bit stream for which the main bit stream is replaced with the subsidiary bit stream is decoded by intra-picture decoding or inter-picture predictive decoding to reproduce pictures carried by the input bit stream.

The present invention further provides a storage medium including an area for storing moving picture data. The area includes main bit stream regions and subsidiary bit stream regions. Stored on the main bit stream regions are main bit streams formed by intra-picture coding and inter-picture predictive coding which are switched per frame or field of moving pictures. Stored on the subsidiary bit stream regions are subsidiary bit streams formed by intra-picture coding specific frames or fields among frames or fields that are also coded by the inter-picture predictive coding, the main and subsidiary bit streams being multiplexed so that each specific frame or field coded by the intra-picture coding by the subsidiary coding processor is inserted in the vicinity of a corresponding specific frame or field coded by the inter-picture coding by the main coding processor.

The term "picture" in this specification means "frame" or "field".

The coding apparatus and method according the present invention generate the output bit stream that includes the main bit stream generated by the intra-picture coding and inter-picture coding and also the subsidiary bit streams generated by the intra-picture coding. Therefore, decrease in code amount of the main bit stream generated by the intra-picture coding does not affect the applicability of the output bit stream to decoding, such as, channel switching, random access, etc, because of the subsidiary bit streams. Furthermore, such decrease also decreases the total amount of the output bit stream, thus the present invention improving coding efficiency.

In decoding, the subsidiary bit streams generated by the intra-picture coding as well as the main bit stream generated by the intra-picture coding are decoded. In other words, the present invention provides many accessible frames or fields for channel switching, random access, high-speed search, etc. This invention thus achieves quick reproduction in channel switching and random access, and smooth searched pictures in high-speed search.

### BRIEF DESCRIPTION OF DRAWINGS

FIG. 1 is a block diagram of a preferred embodiment of the moving picture coding apparatus according to the present invention;
FIGS. 2A and 2B illustrate quantization steps for the quantizers shown in FIG. 1 for the main and subsidiary code processing, respectively;
FIG. 3 illustrates bit streams and timing for conventional coding and decoding;
FIG. 4 illustrates bit streams and timing for coding and decoding according to the present invention;
FIGS. 5A and 5B illustrate output code amounts for conventional coding and for coding according to the present invention, respectively;
FIG. 6 is a block diagram of the first preferred embodiment of the moving picture decoding apparatus according to the present invention; and
FIG. 7 is a block diagram of the second preferred embodiment of the moving picture decoding apparatus according to the present invention.

### DETAILED DESCRIPTION OF PREFERRED EMBODIMENTS

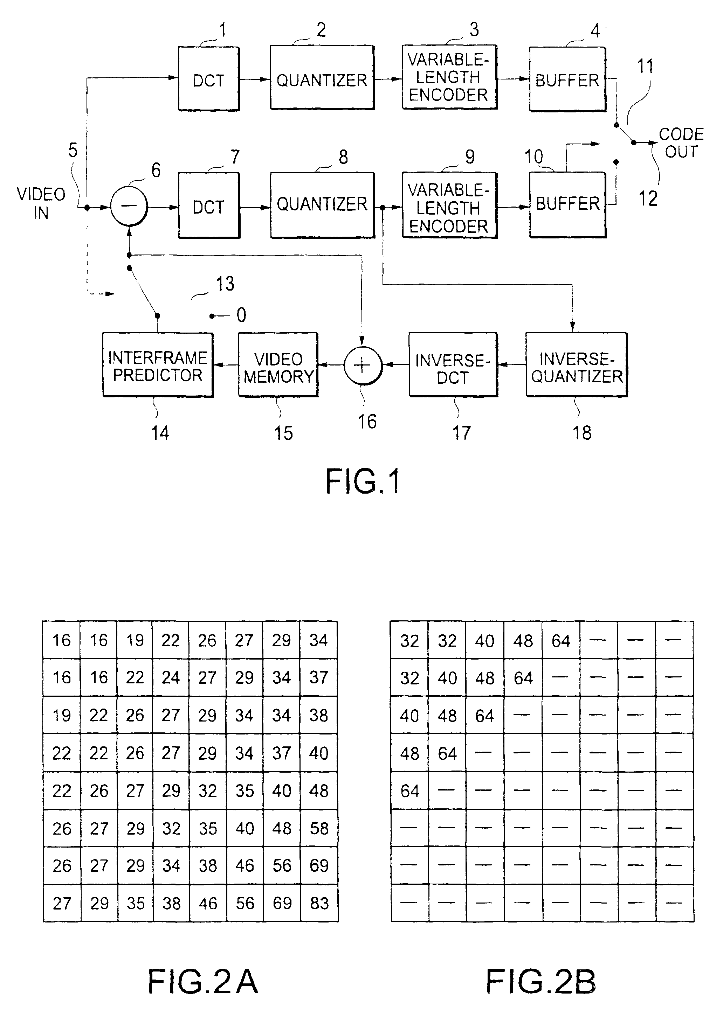

A preferred embodiment of the moving picture coding apparatus according to the present invention will be described with reference to FIGS. 1, 2A and 2B.

The coding apparatus shown in FIG. 1 conducts main coding processing and subsidiary coding processing. The apparatus is provided with a subsidiary coding processor including a discrete cosine transformer (DCT) 1, a quantizer 2, a variable-length encoder 3 and a buffer 4, all for the subsidiary coding processing. The apparatus is further provided with a main coding processor including a subtractor 6, a DCT 7, a quantizer 8, a variable-length encoder 9, a buffer 10, a switch 13, an interframe (predictive-coded frame) predictor 14, an video memory 15, an adder 16, an inverse-DCT 17 and an inverse-quantizer 18, all for the main coding processing. The apparatus also includes a switch 11 for switching output of the main and the subsidiary coding processing.

An input video signal is supplied, through an input terminal 5, to the DCT 1 for the subsidiary coding processing and also to the subtractor 6 for the main coding processing.

The main coding processing is described first. An interframe (predictive-coded frame) predictive signal is also supplied to the subtractor 6 from the interframe predictor 14 via switch 13. The subtractor 6 subtracts the interframe predictive signal from the input video signal to produce a predictive error signal.

The predictive error signal is supplied to the DCT 7 that conducts discrete cosine transform per (8 x 8) block of pixels carried by the predictive error signal. Produced coefficients are supplied to the quantizer 8 and quantized into fixed-length coefficients at a specific quantization step width. The fixed-length coefficients are then supplied to the variable-length encoder 9.

The two-dimensional (8 x 8) coefficients supplied to the variable-length encoder 9 are arranged according to a one-dimensional sequence known as the zigzag scanning and transformed into variable-length codes of zero coefficients and non-zero coefficients by Huffman coding. The predictive error signal thus transformed into the variable-length codes is supplied and stored in the buffer 10 as the main bit stream.

The fixed-length coefficients are also supplied from the quantizer 8 to the inverse-quantizer 18. The inverse-quantizer 18 and the inverse-DCT 17 conduct the processing which are the inverse of those of the quantizer 8 and DCT 7, respectively, to reproduce the predictive error signal.

The reproduced predictive error signal is added to the interframe predictive signal by the adder 16 to reproduce the video signal. The reproduced video signal is once stored in the video memory 15 and then supplied to the interframe predictor 14.

The interframe predictor 14 generates the interframe predictive signal that is then supplied to the switch 13. The generation of the interframe predictive signal may be done by motion compensation.

The switch 13 is controlled in synchronism with the incoming video signal. When the input video signal carries an independent (intra-picture coded) frame, the switch 13 selects the value zero and supplies the value to the subtractor 6 and the adder 16. The main coding processing in this case is the intraframe coding. The input video signal carries an independent frame for every 30th- to 120th-frame (conventionally 10th- to 20th-frame).

On the other hand, when the input video signal carries a predictive-coded frame, the switch 13 selects the interframe predictive signal from the interframe predictor 14. The selected interframe predictive signal is then supplied to the subtractor 6 and the adder 16. The main coding processing in this case is the interframe (predictive-coded frame) predictive coding. In detail, when the input video signal carries predictive-coded (P) frames obtained from preceding independent (I) frames or P frames in the sequence, the main coding processing executes uni-directional interframe predictive coding. Contrary to this, when the input video signal carries bidirectionally predictive-coded (B) frames obtained from the nearest preceding and/or following I or P frames in the sequence, the main coding processing executes bidirectional interframe predictive coding.

The subsidiary coding processing is described next. The input video signal supplied to the DCT 1 is applied discrete cosine transform per (8 x 8) block of pixels. Produced coefficients are supplied to the quantizer 2 and quantized into fixed-length coefficients at a specific quantization step width. The fixed-length coefficients are then supplied to the variable-length encoder 3.

The two-dimensional (8 x 8) coefficients supplied to the variable-length encoder 3 are arranged according to the zigzag scanning and transformed into variable-length codes of zero coefficients and non-zero coefficients by Huffman coding. The video signal thus transformed into the variable-length codes is supplied and stored in the buffer 4 as the subsidiary bit stream.

In the main and subsidiary coding processing, quantization steps for the quantizer 8 (main processing) and the quantizer 2 (subsidiary processing) are different from each other as follows:

FIGS. 2A and 2B show quantization steps (intraframe coding parameters) for the quantizers 8 and 2, respectively.

As shown, the quantization steps for the quantizer 2 are wider than those for the quantizer 8. In other words, the more distant from the DC component ("16" in FIG. 2A, "32" in FIG. 2B), the larger the coefficients of AC components for the quantizer 2 (FIG. 2B) compared to those for the quantizer 8 (FIG. 2A).

Furthermore, the larger the coefficients depicted as "-" in FIG. 2B, the wider the quantization steps, so that the quantized resultants are all zero in the subsidiary coding processing. This is also achieved by the variable-length encoder 3 to zigzag-scan the components from the DC component to several tens of the AC components to truncate the scanning.

A picture reproduced after the subsidiary coding processing thus exhibits low resolution. However, the amount of codes generated by the subsidiary coding processing is about 10 percent of that generated for an independent frame in the main coding processing.

The subsidiary bit stream thus obtained by the subsidiary coding processing is stored in the buffer 4.

The main and the subsidiary bit streams stored in the buffers 10 and 4, respectively, are switched by the switch 11 under the control of the buffer 10. The switch 11 is depicted as just a switch for easier understanding. However, the switch 11 has the function of multiplexing the main and the subsidiary bit streams, thus being realized by a multiplexing circuit. The output bit stream of the switch 11 may be stored in a storage medium. The output bit stream includes the main bit stream of independent frames, predictive-coded frames and the subsidiary bit streams periodically inserted in the main bit stream in the vicinity of (just before and after) a predetermined number of the predictive-coded frames. Multiplexed at the header of each bit stream is coding-type information that indicates whether the bit stream is the main or the subsidiary bit stream, and also whether the bit stream carries an independent frame (I or i) or predictive-coded frame (P or B). A predictive-coded frame with the subsidiary bit stream is generated for every 4th- to 12th-frame.

The coding in the present invention thus provides more predictive-coded frames with the subsidiary bit streams than the conventional coding that provides an independent frame for every 10th- to 20th-frame. Predictive-coded frames except those predictive-coded frames with the subsidiary bit streams are removed after the subsidiary coding processing or not coded by means of a switch (not shown) provided before the DCT 1.

Predictive-coded (P) frames obtained from preceding independent (I) frames or P frames in the sequence are objective of both the main subsidiary coding processing. On the other hand, bidirectionally predictive-coded (B) frames obtained from the nearest preceding and/or following I or P frames in the sequence are objective of the main coding processing but not of the subsidiary coding processing. Because the B frames are not used as reference frames for interframe prediction and thus no continuous decoding from the B frames being possible.

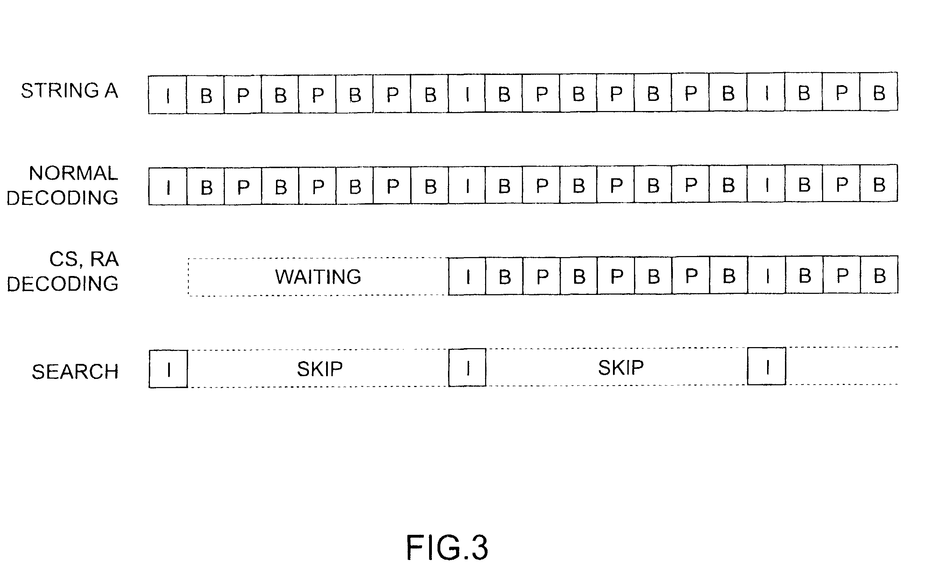

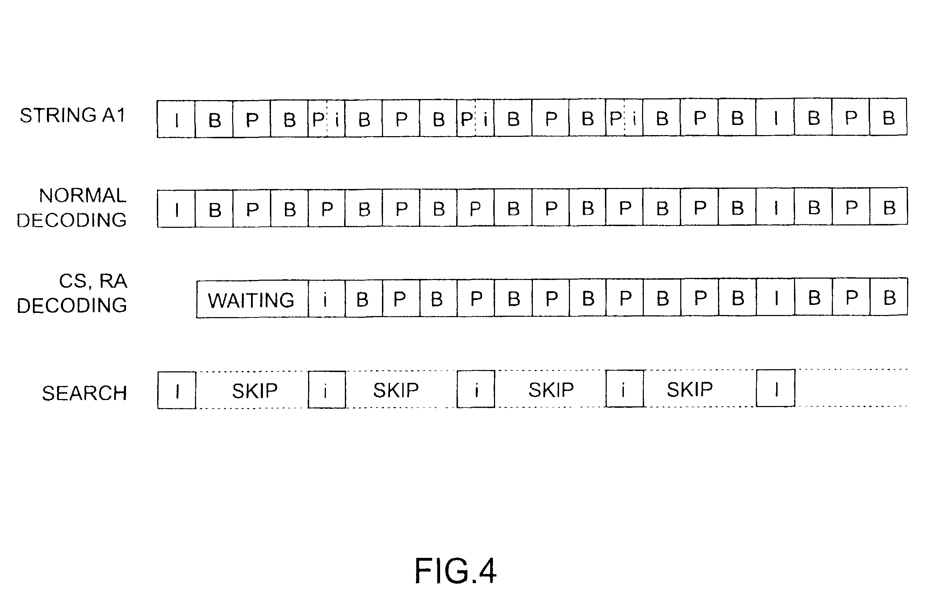

The bit streams and their timing are illustrated in FIGS. 3 and 4. The bit stream STRING A shown in FIG. 3 is generated by the conventional coding apparatus, and which consists of I, B and P frames. On the other hand, the bit stream STRING A1 shown in FIG. 4 is generated by the coding apparatus shown in FIG. 1 according to the present invention, and which consists of I, B and P frames, and also the subsidiary bit streams depicted as "i". The length (amount of codes) of each bit stream shown in FIGS. 3 and 4 depends on frames that constitute the bit stream.

In the present invention, preferably, the subsidiary bit streams "i" follow the main bit streams for channel switching, etc., that is, the strings "i" follow the P frames as shown in STRING A1 of FIG. 4. Because the main bit streams decoded just after the subsidiary bit streams are decoded in channel switching.

On the other hand, the main bit streams may follow the subsidiary bit streams for error correction, etc., that is, the P frames follow the subsidiary bit streams "i" (This arrangement is not shown.).

Since the subsidiary bit streams are used only when errors are detected while the main bit stream are being decoded, the subsidiary bit streams should come first and kept for error concealment. Slices may be used for error concealment instead of frames for a smaller capacity of buffer to store the subsidiary bit streams in a decoding apparatus. In detail, once an error occurs in MPEG systems, that will affect not only the block where the error occurs but also other blocks or frames. When an error occurs, prediction halts in unit of slice within a frame to eliminate the effect of error.

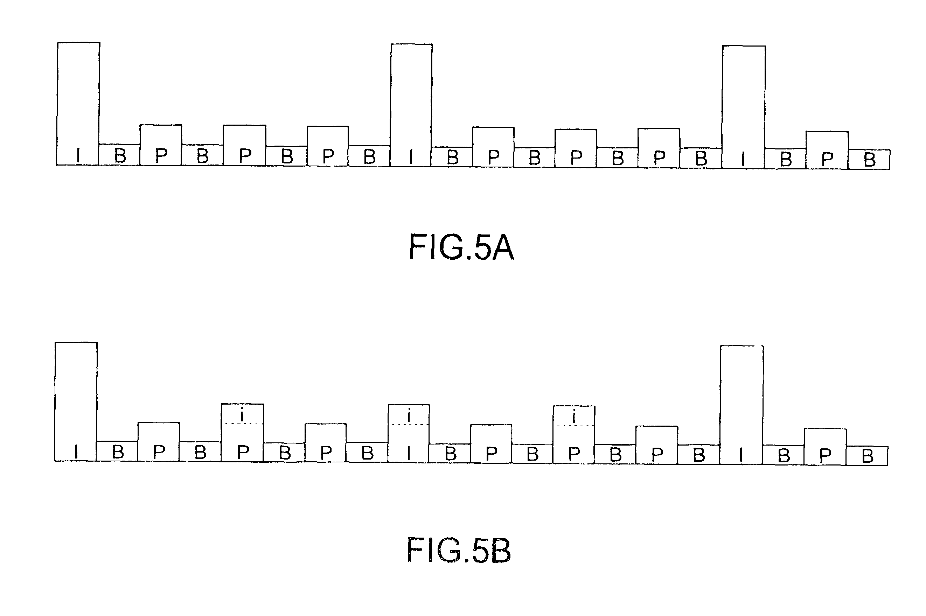

Output code amounts are illustrated in FIG. 5A for conventional coding and FIG. 5B for the present invention.

In the invention, the P frames with the subsidiary bit streams have a larger amount of codes than other P frames without subsidiary bit stream. However, the amounts of the codes of the P frames with the subsidiary bit streams are extremely smaller than those of the I frames.

Comparison is made in coding rate (efficiency) between the present invention and conventional coding.

Suppose that average code amounts of frames in the main bit stream are as follows:

I frame = 600 kbits, P frame = 200 kbits, B frame = 100 kbits and "i" frame = 100 kbits.

Conventionally, an interval M between P frames is two and an interval N between I frames is eight as shown in FIG. 5A, and the coding rate is 6. 0 Mb/s.

Compared to this, in the present invention, M = 2, N = 16 and an interval "n" between "i" frames is four as shown in FIG. 5B, and the coding rate is 5. 8 Mb/s. In detail, the coding rate for the main bit stream is 5. 24 Mb/s and that for the subsidiary bit stream is 0. 56 Mb/s.

Furthermore, in MPEG systems, conventionally M = 3 and N = 15, and the coding rate is 4. 8 Mb/s, on the other hand, the present invention provides M = 3, N = 60 and n = 6, and the coding rate is 4.65 Mb/ s. The cycle of the I frames is 0. 2 seconds for the present invention which is shorter than 0. 5 seconds for the conventional coding.

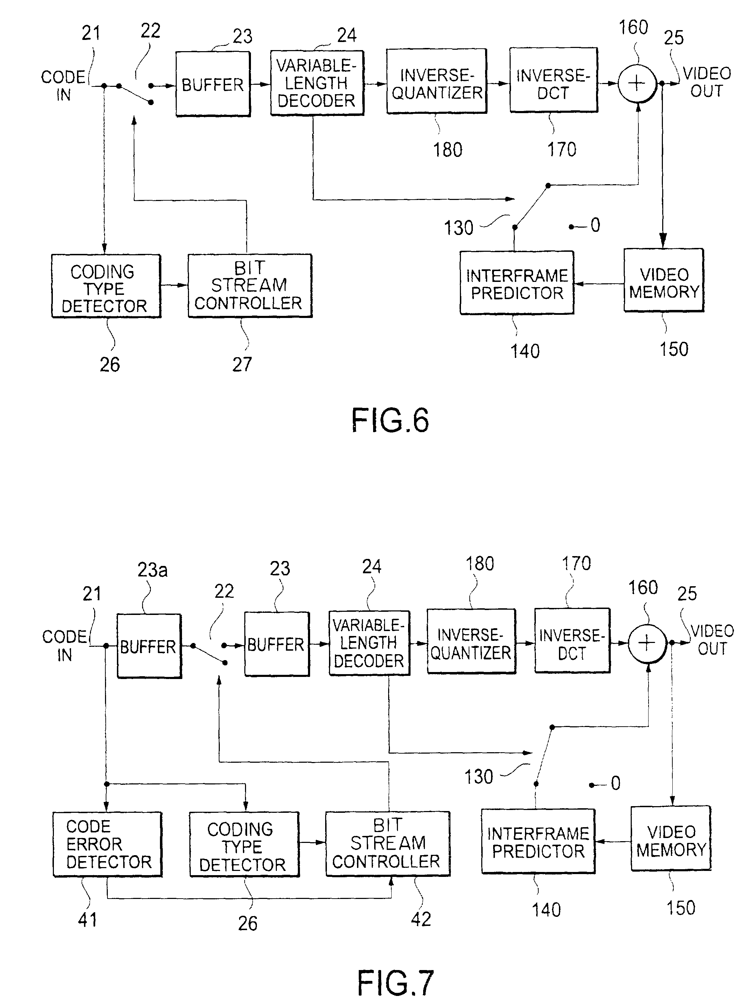

The first preferred embodiment of the a moving picture decoding apparatus according to the present invention will be described with reference to FIG. 6.

A bit stream output from a coding apparatus, such as the apparatus shown in FIG. 1 is supplied to a switch 22 and a coding-type detector 26 through an input terminal 21. The bit stream is switched per frame by the switch 22 that is controlled by a control signal from a bit stream controller 27. The bit stream corresponding to a predictive error signal is supplied to a variable-length decoder 24 via a buffer 23 and is transformed into fixed-length codes to obtain two-dimensional (8 x 8) coefficients. The coefficients are processed by an inverse-quantizer 180 and an inverse-DCT 170 to reproduce the predictive error signal. An interframe predictive signal is added to the predictive error signal by an adder 160 to reproduce a picture.

The reproduced picture is output through an output terminal 25 and also supplied to a video memory 150. The video memory 150 stores a picture of one frame and supplies it to an interframe predictor 140. The interframe predictor 140 produces an interframe predictive signal that is supplied to the adder 160 via a switch 130. The switch 130 selects the value zero when an independent frame is reproduced, thus no addition being proceeded.

The coding-type detector 26 detects the coding-type information multiplexed at the header of the input bit stream to decide whether the input bit stream is the main or the subsidiary bit stream, and carries an independent frame (I or i) or predictive-coded frame (P or B) and generates a coding-type signal. The bit stream controller 27 opens the switch 22 in response to the coding-type signal and removes the subsidiary bit stream when the standard bit stream is input at the usual timing and decoding is continuously performed. This is illustrated as NORMAL DECODING in FIG. 4 and which is the same as that in FIG. 3 for conventional decoding.

On the other hand, in the case of channel switching, random access or high speed search is conducted, the input bit stream is demultiplexed after switching, thus no continuous decoding is performed. Decoding processing is waiting until an independent frame (I or i) of the main or the subsidiary bit stream is input, and starts for the input independent frame.

After this independent frame is input, the standard bit stream is continuously input in the case of channel switching (CS) or random access (RA), thus decoding is continuously performed. This is illustrated as CS, RA DECODING in FIG. 4. Since the bit stream in the present invention contains more independent frames (I and i) than those in the conventional coding, the present invention achieves less waiting time for decoding in channel switching or random access than that illustrated as CS, RA DECODING in FIG. 3 in conventional decoding.

In the case of high-speed search, however, decoding processing is waiting until a next independent frame is input because the bit stream is demultiplexed again after the present independent frame is decoded. Either independent frames I of the main bit stream or subsidiary bit stream "i" may be reproduced for the high speed search. The former (I) reproduces pictures with resolution higher than pictures reproduced by the latter (i). On the contrary, the latter reproduces pictures with movement smoother than pictures reproduced by the former. Since the bit stream in the present invention contains more independent frames (I and i) than that in the conventional coding, the present invention achieves less skip time for decoding in high-speed search illustrated as SEARCH in FIG. 4 than that illustrated as SEARCH in FIG. 3 in the conventional decoding.

The second preferred embodiment of the moving picture decoding apparatus according to the present invention will be described with reference to FIG. 7. Elements in this embodiment that are the same as or analogous to elements in the first embodiment of the moving picture decoding apparatus are referenced by the same reference numerals and will not be explained in detail.

The decoding apparatus shown in FIG. 7 is provided with a buffer 23a and a code error detector 41 in addition to the elements the same as those shown in FIG. 6.

The coding-type detector 26 detects the coding-type information multiplexed at the head of the input bit stream to decide whether the input bit stream is the main or the subsidiary bit stream, and carries an independent frame (I or i) or predictive-coded frame (P or B) and generates a coding-type signal. A bit stream controller 42 opens the switch 22 in response to the coding-type signal and removes the subsidiary bit stream when the standard bit stream is input at the usual timing and decoding is continuously performed like the first embodiment shown in FIG. 6.

The code error detector 41 detects code errors occurred while the bit stream is being transmitted by a transmission line (not shown) connecting the decoding apparatus and a coding apparatus, such as, the apparatus shown in FIG. 1. When a code error is detected, the code error detector 41 outputs an error indicating signal that indicates at which portion of a picture the error occurs.

The bit stream controller 42 opens the switch 22 to remove the subsidiary bit stream when the error indicating signal supplied from the code error detector 41 indicates no error.

On the other hand, when an error occurs in the main bit stream, the bit stream is stored in the buffer 23a to wait the input of the subsidiary bit stream that corresponds to a picture to which the error occurs. The switch 22 then selects the input subsidiary bit stream and removes the main bit stream of a slice to which the error occurs.

When an error occurs in a frame, and no subsidiary bit stream is coded for the frame, the switch 22 selects the frame for decoding. However, the error effects later coming frames. When the subsidiary bit stream is input, which corresponds to a picture affected by the error, the switch 22 selects the input subsidiary bit stream and removes the main bit stream of a slice to which the error occurs. The effect of the error is thus eliminated at the moment of selecting the subsidiary bit stream.

Although not disclosed, motion compensation can be employed in this invention. In this case, an error occurred in a frame will affect other frames in accordance with the motion of picture. This means that the error occurred at a slice of the frame also affects other slices of the frames. The switch 22 in this case also selects the input subsidiary bit stream and removes the main bit stream of a slice to which the error occurs.

The bit streams STRING A1 shown in FIG. 4 can be recorded in this order on a storage medium according to the present invention.

More in detail, the storage medium according to the present invention which is readable by reproduction equipment including a decoding apparatus, such as the apparatus shown in FIGS. 6 or 7, includes an area for storing moving picture data. The area has main bit stream regions stored on which are the main bit streams formed by intraframe coding and interframe predictive coding which are switched per frame or field of moving pictures. The area also has subsidiary bit stream regions stored on which are the subsidiary bit streams formed by intraframe coding specific frames among frames that are also coded by the interframe predictive coding. The main and subsidiary bit streams are multiplexed so that subsidiary bit streams are inserted in the vicinity of the main bit streams for specific frames, as described with reference to FIG. 1.

The present invention is disclosed for processing a video signal in unit of frame, however, this invention is also applicable to processing a video signal in unit of field.

## Claims

1. An apparatus for efficiently coding a moving picture signal, comprising:
a main coding processor (6,7,8 and 9) to selectively encode an input moving picture signal by intra-picture coding or inter-picture coding in units of a frame or a field to output a main bit stream, the intra-picture coding being performed periodically;
a subsidiary coding processor (1,2,3) to encode specific frames or fields carried by the input moving picture signal by intra-picture coding to output a subsidiary bit stream, the specific frames or fields being also coded by the inter-picture coding by the main coding processor; and
a multiplexer (1) to multiplex the main and subsidiary bit streams, thus generating an output bit stream;
**characterized in that**
the multiplexer multiplexes the main and the subsidiary bit streams so that each specific frame or field coded by the intra-picture coding by the subsidiary coding processor is inserted in the vicinity of a corresponding specific frame or field coded by the inter-picture coding by the main coding processor.

2. The apparatus according to claim 1, wherein the main coding processor selectively executes uni-directional predictive coding and bi-directional predictive coding in unit of frame or field while the subsidiary coding processor encodes the specific frames or fields that are also coded by the uni-directional predictive coding by the main coding processor.

3. An apparatus for efficiently decoding a moving picture bit stream having a main bit stream, some main bit stream components having been coded by intra-picture coding and the other main bit stream components having been coded by inter-picture coding, and a subsidiary bit stream coded by intra-picture coding only, comprising:
a detector (26) to detect a coding-type of an input bit stream formed by multiplexing a main bit stream of frames or fields and subsidiary bit streams, the subsidiary bit streams being periodically inserted in the main bit stream in the vicinity of a predetermined number of the frames or fields, the main bit stream having been coded at quantization steps finer than other quantization steps at which the subsidiary bi streams having been coded, and a coding-type information indicating whether the main bit stream is or the subsidiary bit streams string are input, the detector detecting the coding-type information and generating a coding-type signal;
a controller (29) to output the main and the subsidiary bit streams in response to at least the coding-type signal; and
a decoder (24) to decode the output bit stream to reproduce pictures carried by the input bit stream;
**characterized in that**
the controller selectively outputs the main and the subsidiary bit streams in such a way that the controller outputs both the main and the subsidiary bit streams when no continuous decoding is being performed, while the controller outputs only the main bit stream when continuous decoding is being performed.

4. The apparatus according to claim 3, further comprising:
a second detector (41) to detect an error of the input bit stream and generating an error indicating signal that indicates at which of the frames or fields the error occurs, wherein,
in response to the coding-type and error indicating signals, the controller replaces the main bit stream of a frame or field with a subsidiary bit stream inserted in the vicinity thereof at which the error occurs with the subsidiary bit stream, and
the decoder decodes an output bit stream of the controller by intra-picture decoding or inter-picture predictive decoding to reproduce pictures carried by the input bit stream.

5. A method of efficiently coding a moving picture signal, comprising the steps of:
selectively encoding an input moving picture signal by intra-picture coding or inter-picture coding in unit of frame or field to output a main bit stream, the intra-picture coding being performed periodically;
encoding specific frames or fields carried by the input moving picture signal by intra-picture coding to output a subsidiary bit stream, the specific frames or fields being also coded by the inter-picture coding by the main coding processor; and
multiplexing the main and subsidiary bit streams, thus generating an output bit stream;
**characterized in that**
the multiplexing is performed so that each specific frame or field coded by the intra-picture coding by the subsidiary coding processor is inserted in the vicinity of a corresponding specific frame or field coded by the inter-picture coding by the main coding processor.

6. The method according to claim 5, wherein the selective encoding step includes the step of selectively executing uni-directional predictive coding and bi-directional predictive coding in unit of frame or field and the specific frame or field encoding step includes the step of encoding the specific frames or fields that are also coded by the uni-directional predictive coding.

7. A method of efficiently decoding a moving picture bit stream having a main bit stream, some main bit stream components having been coded by intra-picture coding and the other bit stream components having been coded by inter-picture coding and a subsidiary bit stream coded by intra-picture coding only, comprising:
detecting a coding-type of an input bit stream formed by multiplexing a main bit stream of frames or fields and subsidiary bit streams, the subsidiary bit streams being periodically inserted in the main bit stream in the vicinity of a predetermined number of the frames of fields, the main bit stream having been coded at quantization steps finer than other quantization steps at which the subsidiary bit streams having been coded, and a coding-type information indicating whether the main bit stream is or the subsidiary bit streams string are input, the detector detecting the coding-type information and generating a coding-type signal;
outputting the main and the subsidiary bit streams in response to at least the coding-type signal; and
decoding the output bit stream to reproduce pictures carried by the input bit stream;
**characterized in that**
the step of outputting is performed selectively in such a way that the controller outputs both the main and the subsidiary bit streams when no continuous decoding is being performed, while the controller outputs only the main bit stream when continuous decoding is being performed.

8. The method according to claim 7, further comprising the steps of:
detecting an error of the input bit stream and generating an error indicating signal that indicates at which of the frames or fields the error occurs;
replacing the main bit stream of a frame or field with a subsidiary bit stream inserted in the vicinity thereof at which the error occurs with the subsidiary bit stream in response to the coding-type and error indicating signals; and
decoding the bit stream for which the main bit stream is replaced with the subsidiary bit stream by intra-picture decoding or inter-picture predictive decoding to reproduce pictures carried by the input bit stream.

9. A storage medium comprising an area for storing moving picture data, the area including main bit stream regions stored on which are main bit streams formed by intra-picture coding and inter-picture predictive coding which are switched per frame or field of moving pictures, the intra-picture coding having been performed periodically, and subsidiary bit stream regions stored on which are subsidiary bit streams formed by intra-picture coding specific frames among frames that are also coded by the inter-picture predictive coding, the main and subsidiary bit streams being multiplexed
**characterized in that**
the main and subsidiary substreams are multiplexed so that each specific frame or field coded by the intra-picture coding by the subsidiary coding processor is inserted in the vicinity of a corresponding specific frame or field coded by the inter-picture coding by the main coding processor.

## Revendications

1. Appareil pour coder efficacement un signal d'image en mouvement, comprenant :
un processeur de codage principal (6,7,8 et 9) pour encoder sélectivement un signal d'entrée d'image en mouvement par codage infra-image ou codage inter-image en unités de trame ou de champ pour produire un train de bits principal, le codage infra-image étant exécuté périodiquement ;
un processeur de codage subsidiaire (1,2,3) pour encoder des trames ou des champs spécifiques transportés par le signal d'entrée d'image en mouvement par codage infra-image pour produire un train de bits subsidiaire, les trames ou champs spécifiques étant également codés par le codage inter-image exécuté par le processeur de codage principal ; et
un multiplexeur (1) pour multiplexer les trains de bits principaux et subsidiaires, générant ainsi un train de bits de sortie ; **caractérisé en ce que** le multiplexeur multiplexe les trains de bits principaux et subsidiaires de façon à ce que chaque trame ou champ spécifique codé par le codage intra-image exécuté par le processeur de codage subsidiaire soit inséré à proximité d'une trame ou champ spécifique correspondant codé par le codage inter-image exécuté par le processeur de codage principal.

2. Appareil selon la revendication 1, dans lequel le processeur de codage principal exécute sélectivement un codage prédictif unidirectionnel et un codage prédictif bidirectionnel en unité de trame ou de champ pendant que le processeur de codage subsidiaire encode les trames ou champs spécifiques qui sont également codés par un codage prédictif unidirectionnel exécuté par le processeur de codage principal.

3. Appareil pour décoder efficacement un train de bits d'image en mouvement, présentant un train de bits principal, certains composants du train de bits principal ayant été codés par codage intra-image et les autres composants du train de bits principal ayant été codés par codage inter-image, et un train de bits subsidiaire codé par codage infra-image seulement, comprenant :
un détecteur (26) pour détecter le type de codage d'un train de bits d'entrée créé en multiplexant un train de bits principal de trames ou de champs et des trains de bits subsidiaires, les trains de bits subsidiaires étant périodiquement insérés dans le train de bits principal à proximité d'un nombre prédéterminé de trames ou de champs, le train de bit principal ayant été codé avec des pas de quantification plus fins que d'autres pas de quantification avec lesquels ont été codés les trains de bits subsidiaires, et une information sur le type de codage indiquant si l'entrée est représentée par le train de bits principal ou par les trains de bits subsidiaires, le détecteur détectant l'information sur le type de codage et générant un signal de type codage ;
un contrôleur (29) pour produire les trains de bit principaux et subsidiaires en réponse au moins au signal de type codage ; et un décodeur (24) pour décoder le train de bits de sortie pour reproduire les images transportées par les trains de bits d'entrée ; **caractérisé en ce que** le contrôleur produit sélectivement les trains de bits principaux et subsidiaires de manière à ce que le contrôleur produise les trains de bits principaux et subsidiaires quand aucun décodage continu n'est en cours d'exécution, alors que le contrôleur produit uniquement le train de bits principal quand un décodage continu est en cours d'exécution.

4. Appareil selon la revendication 3, comprenant en outre :
un second détecteur (41) pour détecter une erreur du train de bits d'entrée et générer un signal d'indication d'erreur qui indique dans quelles trames ou champs l'erreur s'est produite, dans lequel,
en réponse aux signaux de type codage et d'indication d'erreur, le contrôleur remplace le train de bits principal d'une trame ou d'un champ par un train de bits subsidiaire inséré à proximité, où a lieu l'erreur du train de bits subsidiaire, et
le décodeur décode un train de bits de sortie produit par le contrôleur par décodage infra-image ou par décodage prédictif inter-image pour reproduire les images transportées par le train de bits d'entrée.

5. Dispositif pour coder efficacement un signal d'image en mouvement, comprenant les étapes :
d'encodage sélectif d'un signal d'entrée d'images en mouvement par codage infra-image ou de codage inter-image en unité de trame ou de champ pour produire un train de bits principal, le codage infra-image étant exécuté périodiquement ;
d'encodage de trames ou de champs spécifiques transportés par le signal d'entrée d'images en mouvement par codage infra-image pour produire un train de bits subsidiaire, les trames ou champs spécifiques étant également codés par le codage inter-image exécuté par le processeur de codage principal ;et
de multiplexage des trains de bits principaux et subsidiaires, générant ainsi un train de bits de sortie ; **caractérisé en ce que** le multiplexage est exécuté de façon à ce que chaque trame ou champ spécifique codé par le codage infra-image exécuté par le processeur de codage subsidiaire soit inséré à proximité d'une trame ou champ spécifique correspondant codé par le codage inter-image exécuté par le processeur de codage principal.

6. Dispositif selon la revendication 5, dans lequel l'étape d'encodage sélectif comprend l'étape d'exécution sélective d'un codage prédictif unidirectionnel et d'un codage prédictif bidirectionnel en unité de trame ou de champ, et l'étape d'encodage de la trame ou du champ spécifique comprend l'étape d'encodage des trames ou champs spécifiques qui sont également codés par le codage prédictif unidirectionnel.

7. Dispositif pour décoder efficacement un train de bits d'images en mouvement présentant un train de bits principal, certains composants du train de bits principal ayant été codés par codage infra-image et les autres composants du train de bits ayant été codés par codage inter-image et un train de bits subsidiaire codé par codage infra-image uniquement, comprenant :
la détection d'un type de codage d'un train de bits d'entrée créé en multiplexant un train de bits principal de trames ou de champs et des trains de bits subsidiaires, les trains de bits subsidiaires étant périodiquement insérés dans le train de bits principal à proximité d'un nombre prédéterminé de trames ou de champs, le train de bits principal ayant été codé avec des pas de quantification plus fins que d'autres pas de quantification avec lesquels ont été codés les trains de bits subsidiaires, et une information sur le type de codage indiquant si l'entrée est représentée par le train de bits principal ou par les trains de bits subsidiaires, le détecteur détectant l'information sur le type de codage et créant un signal de type codage ;
la production des trains de bits principaux et subsidiaires en réponse au moins au signal de type codage ; et décodage du train de bits de sortie pour reproduire les images transportées par le train de bits de sortie ; **caractérisé en ce que** l'étape de production est exécutée sélectivement de manière à ce que le contrôleur produise les trains de bits principaux et subsidiaires quand aucun décodage continu n'est en cours d'exécution, alors que le contrôleur produit uniquement le train de bits principal quand un décodage continu est en cours d'exécution.

8. Dispositif selon la revendication 7, comprenant en outre les étapes :
de détection d'une erreur du train de bits d'entrée et de création d'un signal d'indication d'erreur qui indique dans quelles trames ou champs l'erreur s'est produite ;
remplacement du train de bits principal d'une trame ou d'un champ par un train de bits subsidiaire inséré à proximité, où a lieu l'erreur, en réponse aux signaux de type codage et d'indication d'erreur ; et
de décodage du train de bits pour lequel le train de bits principal est remplacé par le train de bits subsidiaire par décodage infra-image ou décodage prédictif inter-image pour reproduire les images transportées par le train de bits d'entrée.

9. Moyen de stockage comprenant une zone pour stocker des données d'image en mouvement, la zone comprenant des régions de trains de bits principaux dans lesquelles sont stockés des trains de bits principaux créés par codage infra-image ou par codage prédictif inter-image qui sont alternés par trame ou par champ d'images en mouvement, le codage infra-image ayant été exécuté périodiquement, et les régions de trains de bits subsidiaires dans lesquelles sont stockés les trains de bits subsidiaires créés par des trames spécifiques codées par codage intra-image parmi des trames qui sont également codées par codage prédictif inter-image, les trains de bits principaux et subsidiaires étant multiplexés ; **caractérisé en ce que** les trains de bits principaux et subsidiaires sont multiplexés de façon à ce que chaque trame ou champ spécifique codé par le codage infra-image exécuté par le processeur de codage subsidiaire soit inséré à proximité d'une trame ou d'un champ spécifique correspondant codé par le codage inter-image exécuté par le processeur de codage principal.

## Patentansprüche

1. Vorrichtung zum wirksamen Kodieren eines Bewegtbildsignals, mit:
- einem Hauptkodierprozessor (6,7,8 und 9) zum wahlweisen Kodieren eines einlaufenden Bewegtbildsignals zum Ausgeben eines Hauptbitstroms durch bildinternes Kodieren oder Bild-zu-Bild-Kodieren in Einheiten von Vollbildern oder Teilbildern, wobei das Bild-zu-Bild-Kodieren periodisch erfolgt;
- einem Nebenkodierprozessor (1,2,3) zum Kodieren bestimmter Vollbilder oder Teilbilder, welche von dem einlaufenden Bewegtbildsignal aufgrund bildinternen Kodierens mitgeführt werden, um einen Nebenbitstrom auszugeben, wobei diese bestimmten Vollbilder oder Teilbilder auch vom Hauptkodierprozessor mittels Bild-zu-Bild-Kodieren kodiert wurden; und
- einem Multiplexer (1) zum Multiplexen der Haupt- und Nebenbitströme und somit zum Erzeugen eines ausgehenden Bitstroms;
**dadurch gekennzeichnet,**
**dass** der Multiplexer die Haupt- und Nebenbitströme multiplext, so dass jedes bestimmte Vollbild oder jedes bestimmte Teilbild, welcher oder welches mittels bildinternen Kodierens durch den Nebenkodierprozessor kodiert wurde, in der Nachbarschaft eines entsprechenden bestimmten Vollbilds oder Teilbilds, welches mittels Bild-zu-Bild-Kodieren durch den Hauptkodierprozessor kodiert wurde, eingefügt wird.

2. Vorrichtung nach Anspruch 1, bei der der Hauptkodierprozessor in Einheiten von Vollbildern oder Teilbildern wahlweise ein einseitig gerichtetes vorausschauendes Kodieren und ein zweiseitig gerichtetes vorausschauendes Kodieren durchführt, während der Nebenkodierprozessor diejenigen bestimmter Vollbilder oder Teilbilder kodiert, die auch vom Hauptkodierprozessor mittels einseitig gerichtetem Kodieren kodiert worden sind.

3. Vorrichtung zum wirksamen Dekodieren eines bewegten Bildbitstroms mit einem Hauptbitstrom, wobei einige Hauptbitstromkomponenten durch bildinternes Kodieren und die anderen Hauptbitstromkomponenten durch Bild-zu-Bild-Kodieren kodiert wurden, und wobei ein Nebenbitstrom nur durch bildinternes Kodieren kodiert wurde, mit:
- einem Detektor (26) zum Erfassen einer Kodierungsart eines einlaufenden Bitstroms, der durch Multiplexen eines Hauptbitstroms von Vollbildern oder Teilbildern und Nebenbitströmen gebildet ist, wobei die Nebenbitströme in der Nachbarschaft einer vorbestimmten Anzahl von Vollbildern oder Teilbildern periodisch in den Hauptbitstrom eingefügt wurden, wobei der Hauptbitstrom mit Quantisierungsschritten kodiert wurde, die kleiner als andere Quantisierungsschritte sind, mit denen die Nebenbitströme kodiert wurden, und einer Kodierungsartinformation, die angibt, ob ein Hauptbitstrom oder eine Nebenbitstromdatenfolge einläuft, wobei der Detektor die Kodierungsartinformation erfasst und ein Kodierungsartsignal erzeugt;
- einem Steuerer (29) zum Ausgeben der Haupt- und Nebenbitströme in Antwort auf zumindest das Kodierungsartsignal; und einem Dekoder (24) zum Dekodieren des ausgehenden Bitstroms zum Reproduzieren von Bildern, die von den einlaufenden Bitströmen mitgeführt wurden;
**dadurch gekennzeichnet,**
**dass** der Steuerer sowohl die Haupt- als auch die Nebenbitströme in einer solchen Weise wahlweise ausgibt, dass der Steuerer die Haupt- und Nebenbitströme beide ausgibt, wenn kein ständiges Dekodieren erfolgt, während der Steuerer nur den Hauptbitstrom ausgibt, wenn ständiges Dekodieren erfolgt.

4. Vorrichtung nach Anspruch 3, die ferner umfasst:
- einen zweiten Detektor (41) zum Erfassen eines Fehlers im einlaufenden Bitstrom und zum Erzeugen eines Fehleranzeigesignals, das angibt, in welchem der Rahmen oder Felder der Fehler auftritt, wobei
- der Steuerer in Antwort auf die Kodierungsartsignale und die Fehleranzeigesignale den Hauptbitstrom eines Vollbildes oder Teilbildes durch einen Nebenbitstrom ersetzt, wobei der Nebenbitstrom in der Nachbarschaft von ihm dort, wo der Fehler auftritt, eingesetzt ist, und
- der Dekodierer einen ausgehenden Bitstrom des Steuerers durch bildinternes Kodieren oder vorausschauendes Bild-zu-Bild-Kodieren zum Reproduzieren von durch den eingehenden Bitstrom mitgeführten Bildern dekodiert.

5. Verfahren zum wirksamen Kodieren eines Bewegtbildsignals, mit den Schritten:
- wahlweises Kodieren eines einlaufenden Bewegtbildsignals zum Ausgeben eines Hauptbitstroms durch bildinternes Kodieren oder Bild-zu-Bild-Kodieren in Einheiten von Vollbildern oder Teilbildern, wobei das Bild-zu-Bild-Kodieren periodisch erfolgt;
- Kodieren bestimmter Rahmen oder Felder, welche von dem einlaufenden Bewegtbildsignal aufgrund bildinternem Kodieren mitgeführt werden, um einen Nebenbitstrom auszugeben, wobei diese bestimmten Rahmen oder Felder auch mit tels Bild-zu-Bild-Kodierens durch den Hauptkodierprozessor kodiert wurden; und
- Multiplexen der Haupt- und Nebenbitströme und somit Erzeugen eines ausgehenden Bitstroms;
**dadurch gekennzeichnet,**
**dass** das Multiplexen so erfolgt, dass jedes bestimmte Vollbild oder jedes bestimmte Teilbild, welches mittels bildinternen Kodierens durch den Nebenkodierprozessor kodiert wurde, in der Nachbarschaft eines entsprechenden bestimmten Vollbilds oder Teilbilds, welches mittels Bild-zu-Bild-Kodierens durch den Hauptkodierprozessor kodiert wurde, eingefügt wird.

6. Verfahren nach Anspruch 5, bei welchem der Schritt des wahlweisen Kodierens den Schritt des wahlweisen Durch führens eines einseitig gerichteten vorausschauenden Kodierens oder eines zweiseitig gerichteten vorausschauen den Kodierens in Einheiten von Rahmen oder Feldern um fasst, und bei dem der Schritt des Kodierens der bestimmten Vollbilder oder Teilbilder den Schritt des Kodierens derjenigen bestimmten Rahmen oder Felder umfasst, die auch mittels einseitig gerichtetem Kodieren kodiert wurden.

7. Verfahren zum wirksamen Dekodieren eines Bewegtbildbitstroms mit einem Hauptbitstrom, wobei einige Hauptbitstromkomponenten durch bildinternes Kodieren und die deren Bitstromkomponenten durch Bild-zu-Bild-Kodierer kodiert wurden und ein Nebenbitstrom nur durch bildinternes Kodieren kodiert wurde, mit:
- Erfassen der Kodierungsart eines einlaufenden Bitstroms, der aus einem Hauptbitstrom von Vollbildern oder Teilbildern und Nebenbitströmen durch Multiplexen gebildet ist, wobei die Nebenbitströme in der Nachbarschaft einer vorbestimmten Anzahl von Rahmen oder Feldern periodisch in den Hauptbitstrom eingefügt wurden, wobei der Hauptbitstrom mit Quantisierungsschritten kodiert wurde, die kleiner als andere Quantisierungsschritte sind, mit denen die Nebenbitströme kodiert wurden, und eine Kodierungsartinformation, die angibt, ob der Hauptbitstrom oder die Nebenbitstromdatenfolgen einlief(en), wobei der Detektor signal erzeugt;
- Ausgeben der Haupt- und Nebendatenströme in Antwort auf zumindest das Kodierungsartsignal; und Dekodieren des ausgegebenen Bitstroms zum Reproduzieren von Bildern, die von dem ausgegebenen Bitstrom mitgeführt wurden;
**dadurch gekennzeichnet,**
**dass** der Schritt des Ausgebens wahlweise in einer solchen Weise durchgeführt wird, dass der Steuerer sowohl die Haupt-, als auch die Nebendatenströme ausgibt, wenn kein ständiges Dekodieren erfolgt, während der Steuerer nur den Hauptdatenstrom ausgibt, wenn ein ständiges Dekodieren erfolgt.

8. Verfahren nach Anspruch 7, das ferner die Schritte um fasst:
- Erfassen eines Fehlers im einlaufenden Datenstrom und Erzeugen eines Fehleranzeigesignals, das angibt, in welchem das Vollbilld oder Teilbild der Fehler auftritt;
- Ersetzen des Hauptbitstroms eines Rahmens oder Felds durch einen Nebenbitstrom, wobei der Nebenbitstrom in der Nachbarschaft von ihm dort, wo der Fehler auftritt, eingesetzt ist, in Antwort auf die Kodierungsart- und Fehleranzeigesignale; und
- Dekodieren des Bitstroms, bei dem der Hauptbitstrom mittels bildinternen Dekodierens oder vorausschauenden Bildzu-Bild-Dekodierens durch den Nebenbildstrom ersetzt wird, um Bilder zu reproduzieren, die von dem einlaufenden Bitstrom mitgeführt werden.

9. Speichermittel mit einem Bereich zum Speichern von Bewegtbilddaten, wobei der Bereich Hauptbitstromgebiete, auf denen Hauptbitströme abgelegt sind, die durch bildinternes Kodieren und durch vorausschauendes Bild-zu-Bild-Kodieren gebildet wurden, und die in Bewegtbildern vollbild- oder teilbildweise geschaltet wurden, wobei das Bild-zu-Bild-Kodieren periodisch erfolgte, sowie Nebenbitstromgebiete umfasst, auf denen Nebenbitströme abgelegt sind,
die durch bildinternes Kodieren von bestimmten Vollbildern zwischen Vollbildern gebildet sind, die auch durch vorausschauendes Bild-zu-Bild-Kodieren kodiert sind, wobei die Haupt- und Nebenbitströme gemultiplext sind,
**dadurch gekennzeichnet,**
**dass** die Haupt- und Nebenbitströme so gemultiplext sind, dass jedes bestimmte Vollbild oder jedes bestimmte Teilbild, welcher oder welches mittels bildinternen Kodierens durch den Nebenkodierprozessor kodiert wurde, in der Nachbarschaft eines entsprechenden bestimmten Vollbildes oder Teilbildes, welches mittels Bild-zu-Bild-Kodieren durch den Hauptkodierprozessor kodiert wurde, eingefügt ist.
